# EUROPEAN PATENT APPLICATION

(11) **EP 3 626 934 A1**
(43) Date of publication of application: **25.03.2020**
(21) Application number: 19199309.6
(22) Date of filing: 24.09.2019
(51) Int. Cl.: F01D 11/08, F01D 11/00

(54) **TURBINE SECTION COMPRISING A FEATHERSEAL FORMED OF CMC MATERIAL**

(30) Priority: 24.09.2018 US 201816139209
(71) Applicant: United Technologies Corporation, Farmington, CT 06032 (US)
(72) Inventor: CLARK, Thomas E., Sanford, ME Maine 04073 (US); BARKER, William M., North Andover, MA Massachusetts 01845 (US)
(74) Representative: Dehns

(57) **Abstract**

A turbine section for a gas turbine engine includes a turbine blade that extends radially outwardly to a radially outer tip and for rotation about an axis of rotation. A blade outer air seal has a plurality of segments (600A,600B) mounted in a support structure and arranged circumferentially about the axis of rotation and radially outward of the outer tip. A featherseal (500) is arranged between each of the plurality of segments (600A,600B). The featherseal (500) is formed from a ceramic matrix composite material.

## Description

### BACKGROUND

This application relates to a feather seal for use with blade outer air seals or other gas turbine engine components.

Gas turbine engines are known and typically include a compressor compressing air and delivering it into a combustor. The air is mixed with fuel in the combustor and ignited. Products of the combustion pass downstream over turbine rotors, driving them to rotate.

It is desirable to ensure that the bulk of the products of combustion pass over turbine blades on the turbine rotor. As such, it is known to provide blade outer air seals radially outwardly of the blades. Blade outer air seals have been proposed made of ceramic matrix composite fiber layers.

In order to prevent fluid leakage, featherseals may be provided between adjacent components near the core flow path boundary. For example, some known engines include featherseals that span a gap between adjacent blade outer air seals.

### SUMMARY

In a first aspect of the present invention, there is provided a turbine section for a gas turbine engine including a turbine blade that extends radially outwardly to a radially outer tip and for rotation about an axis of rotation. A blade outer air seal has a plurality of segments mounted in a support structure and arranged circumferentially about the axis of rotation and radially outward of the outer tip. A plurality of featherseals are provided, each featherseal is arranged between adjacent segments. The featherseal is formed from a ceramic matrix composite material.

In an embodiment of the above, each of the plurality of segments has a circumferentially extending slot at each circumferential end. The circumferentially extending slot forms a radially inner portion and a radially outer portion.

In a further embodiment of any of the above, the featherseal is arranged in the circumferentially extending slot.

In a further embodiment of any of the above, the featherseal is in contact with the radially inner portion.

In a further embodiment of any of the above, the featherseal has a width in a circumferential direction that is smaller than a slot width in the circumferential direction.

In a further embodiment of any of the above, the radially inner portion extends further than the radially outer portion, such that a gap is formed between each radially outer portion.

In a further embodiment of any of the above, the featherseal has an axially extending rib arranged in the gap.

In a further embodiment of any of the above, the rib is in contact with the radially outer portion.

In a further embodiment of any of the above, the rib extends an entire axial length of the featherseal.

In a further embodiment of any of the above, the rib is centered on the featherseal in a circumferential direction.

In a further embodiment of any of the above, the featherseal is generally rectangular in shape.

In a further embodiment of any of the above, the featherseal has rounded corners.

In a further embodiment of any of the above, the featherseal is formed from a continuous ceramic matrix composite sheet.

In a further embodiment of any of the above, the featherseal has at least two plies of ceramic matrix composite material.

In a further embodiment of any of the above, the blade outer air seal is a ceramic matrix composite material.

In a further embodiment of any of the above, the blade outer air seal is a monolithic ceramic material.

In a further embodiment of any of the above, the blade outer air seal is a cobalt alloy.

In a further aspect of the present invention, there is provided a method of forming a featherseal including the steps of providing a ceramic matrix composite sheet formed from a plurality of layers of fibrous woven structure. A densification material is injected into the ceramic matrix composite sheet. The ceramic matrix composite sheet is machined to a featherseal shape.

In an embodiment of the above, the featherseal shape is a rectangular shape and has rounded corners.

In a further embodiment of any of the above,the fibrous woven structure includes silicon carbide fibers. The densification material is a silicon carbide matrix.

These and other features may be best understood from the following drawings and specification.

### BRIEF DESCRIPTION OF THE DRAWINGS

Figure 1 schematically shows a gas turbine engine.
Figure 2 shows a turbine section.
Figure 3A is a cross-sectional view through a blade outer air seal.
Figure 3B shows an alternative blade outer air seal.
Figure 4A shows a first method step.
Figure 4B shows a subsequent step.
Figure 5 shows a cross-sectional view of a portion of a turbine section.
Figure 6A shows a first method step.
Figure 6B shows a subsequent step.
Figure 7A shows a view of a featherseal.
Figure 7B shows a view of a featherseal.
Figure 8 shows another embodiment of a featherseal.
Figure 9A shows a cross-sectional view of a portion of a turbine section.
Figure 9B shows a cross-sectional view of a portion of a turbine section.

### DETAILED DESCRIPTION

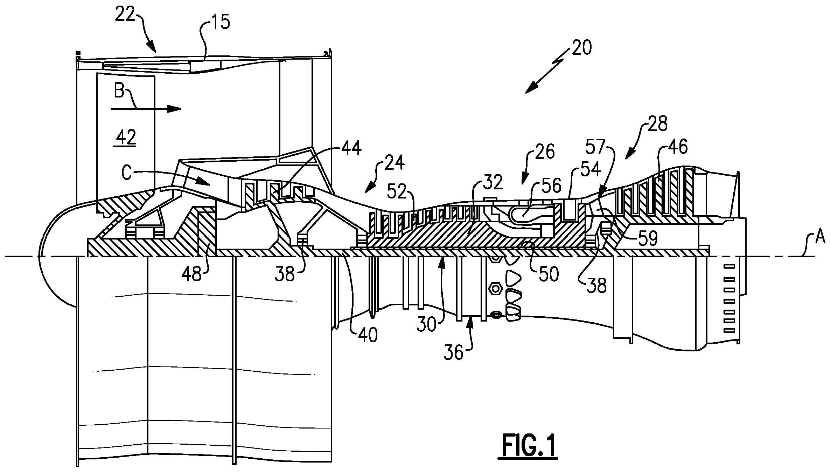

Figure 1 schematically illustrates a gas turbine engine 20. The gas turbine engine 20 is disclosed herein as a two-spool turbofan that generally incorporates a fan section 22, a compressor section 24, a combustor section 26 and a turbine section 28. The fan section 22 drives air along a bypass flow path B in a bypass duct defined within a nacelle 15, and also drives air along a core flow path C for compression and communication into the combustor section 26 then expansion through the turbine section 28. Although depicted as a two-spool turbofan gas turbine engine in the disclosed non-limiting embodiment, it should be understood that the concepts described herein are not limited to use with two-spool turbofans as the teachings may be applied to other types of turbine engines including three-spool architectures.

The exemplary engine 20 generally includes a low speed spool 30 and a high speed spool 32 mounted for rotation about an engine central longitudinal axis A relative to an engine static structure 36 via several bearing systems 38. It should be understood that various bearing systems 38 at various locations may alternatively or additionally be provided, and the location of bearing systems 38 may be varied as appropriate to the application.

The low speed spool 30 generally includes an inner shaft 40 that interconnects, a first (or low) pressure compressor 44 and a first (or low) pressure turbine 46. The inner shaft 40 is connected to the fan 42 through a speed change mechanism, which in exemplary gas turbine engine 20 is illustrated as a geared architecture 48 to drive a fan 42 at a lower speed than the low speed spool 30. The high speed spool 32 includes an outer shaft 50 that interconnects a second (or high) pressure compressor 52 and a second (or high) pressure turbine 54. A combustor 56 is arranged in exemplary gas turbine 20 between the high pressure compressor 52 and the high pressure turbine 54. A mid-turbine frame 57 of the engine static structure 36 may be arranged generally between the high pressure turbine 54 and the low pressure turbine 46. The mid-turbine frame 57 further supports bearing systems 38 in the turbine section 28. The inner shaft 40 and the outer shaft 50 are concentric and rotate via bearing systems 38 about the engine central longitudinal axis A which is collinear with their longitudinal axes.

The core airflow is compressed by the low pressure compressor 44 then the high pressure compressor 52, mixed and burned with fuel in the combustor 56, then expanded over the high pressure turbine 54 and low pressure turbine 46. The mid-turbine frame 57 includes airfoils 59 which are in the core airflow path C. The turbines 46, 54 rotationally drive the respective low speed spool 30 and high speed spool 32 in response to the expansion. It will be appreciated that each of the positions of the fan section 22, compressor section 24, combustor section 26, turbine section 28, and fan drive gear system 48 may be varied. For example, gear system 48 may be located aft of the low pressure compressor, or aft of the combustor section 26 or even aft of turbine section 28, and fan 42 may be positioned forward or aft of the location of gear system 48.

The engine 20 in one example is a high-bypass geared aircraft engine. In a further example, the engine 20 bypass ratio is greater than about six, with an example embodiment being greater than about ten, the geared architecture 48 is an epicyclic gear train, such as a planetary gear system or other gear system, with a gear reduction ratio of greater than about 2.3 and the low pressure turbine 46 has a pressure ratio that is greater than about five. In one disclosed embodiment, the engine 20 bypass ratio is greater than about ten, the fan diameter is significantly larger than that of the low pressure compressor 44, and the low pressure turbine 46 has a pressure ratio that is greater than about five. Low pressure turbine 46 pressure ratio is pressure measured prior to inlet of low pressure turbine 46 as related to the pressure at the outlet of the low pressure turbine 46 prior to an exhaust nozzle. The geared architecture 48 may be an epicycle gear train, such as a planetary gear system or other gear system, with a gear reduction ratio of greater than about 2.3:1 and less than about 5:1. It should be understood, however, that the above parameters are only exemplary of one embodiment of a geared architecture engine and that the present invention is applicable to other gas turbine engines including direct drive turbofans.

A significant amount of thrust is provided by the bypass flow B due to the high bypass ratio. The fan section 22 of the engine 20 is designed for a particular flight condition -- typically cruise at about 0.8 Mach and about 35,000 feet (10,668 meters). The flight condition of 0.8 Mach and 35,000 ft (10,668 meters), with the engine at its best fuel consumption - also known as "bucket cruise Thrust Specific Fuel Consumption ('TSFC')" - is the industry standard parameter of lbm of fuel being burned divided by lbf of thrust the engine produces at that minimum point. "Low fan pressure ratio" is the pressure ratio across the fan blade alone, without a Fan Exit Guide Vane ("FEGV") system. The low fan pressure ratio as disclosed herein according to one non-limiting embodiment is less than about 1.45. "Low corrected fan tip speed" is the actual fan tip speed in ft/sec divided by an industry standard temperature correction of [(Tram °R) / (518.7 °R)]^{0.5} (where °R = K x 9/5) . The "Low corrected fan tip speed" as disclosed herein according to one non-limiting embodiment is less than about 1150 ft / second (350.5 meters/second).

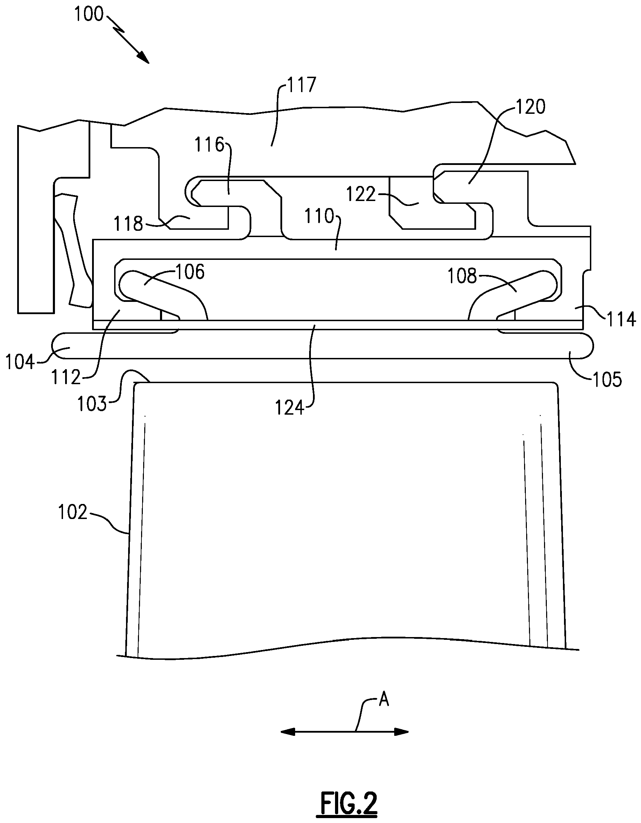

Figure 2 shows a portion of a turbine section 100, which may be incorporated into a gas turbine engine such as the one shown in Figure 1. However, it should be understood that the turbine section 100 could be utilized in other gas turbine engines, and even gas turbine engines not having a fan section at all.

A turbine blade 102 has a radially outer tip 103 that is spaced from a blade outer air seal ("BOAS") 104. The BOAS 104 may be made up of a plurality of seal segments 105 that are circumferentially arranged in an annulus about the central axis A of the engine 20. The BOAS seal segments 105 may be monolithic bodies that are formed of a high thermal-resistance, low-toughness material, such as a ceramic matrix composite ("CMC"). In another embodiment, the seal segments 105 may be formed from another material, such as monolithic ceramic or a metallic alloy. In one example, the seal segments 105 are a cobalt alloy.

A forward hook 106 and an aft hook 108 are formed on the BOAS 104. A support block 110 includes a rearwardly facing forward hook 112 supporting forward hook 106 and a forwardly facing aft hook 114 supporting aft hook 108.

As shown, the attachment block 110 is supported on a static support or engine case 117. Case 117 may extend for a full 360° about the engine axis A. Case 117 has a rearwardly facing forward hook 118 supporting forwardly facing forward hook 116 of the attachment block 110. The case 117 has a rearwardly facing aft hook 122 supporting a forwardly facing aft hook 120 on the attachment block. It should be understood that the arrangement of the hooks 118 and 120 and 116 and 118 could be reversed such that hooks 118 and 122 face forwardly and hooks 116 and 120 face rearwardly. However, in one aspect of this disclosure, the hooks 116 and 120 face in a common axial direction and the hooks 118 and 122 face in an opposed axial direction. In some embodiments, the turbine section 100 may include a wedge seal 124.

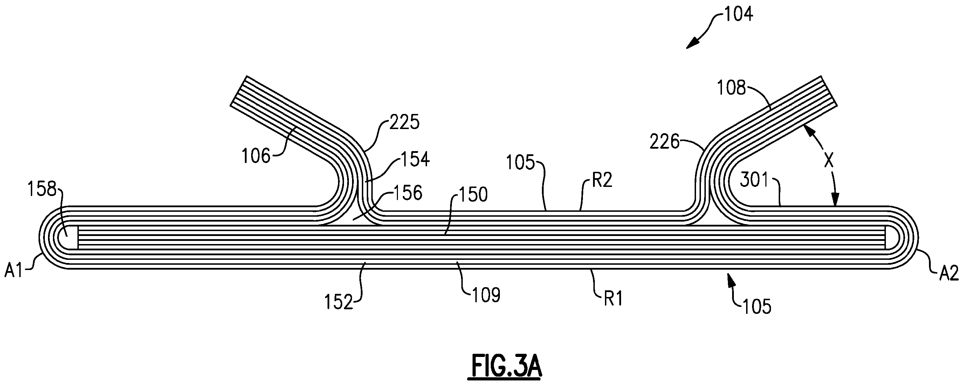

Figure 3A shows a cross-section of an exemplary BOAS seal segment 105. Each seal segment 105 is a body that defines radially inner and outer sides R1, R2, respectively, and first and second axial sides A1, A2, respectively. The radially inner side R1 faces in a direction toward the engine central axis A. The radially inner side R1 is thus the gas path side of the seal segment 105 that bounds a portion of the core flow path C. The first axial side A1 faces in a forward direction toward the front of the engine 20 (i.e., toward the fan 42), and the second axial side A2 faces in an aft direction toward the rear of the engine 20 (i.e., toward the exhaust end).

The BOAS 104 has hooks 106 and 108 and a central web 109. In this embodiment, the BOAS 104 is formed of a ceramic matrix composite ("CMC") material. The BOAS 104 is formed of a plurality of CMC laminates. The laminates may be silicon carbide fibers, formed into a woven fabric in each layer. The fibers may be coated by a boron nitride.

The BOAS 104 is shown to have a central reinforcement laminate 150 including a plurality of layers. An overwrap 152 also includes a plurality of layers or laminates, and spans the central web 109 which is defined axially between hooks 106 and 108, and axially outwardly of both hooks. The overwrap layer 152 also extends back to form a radially inner portion of the hooks 106 and 108. A hook backing portion 154 is secured to the overwrap portion 152 to complete the hooks 106 and 108. Spaces 156 and 158 may be filled with loose fibers, as will be explained in more detail below.

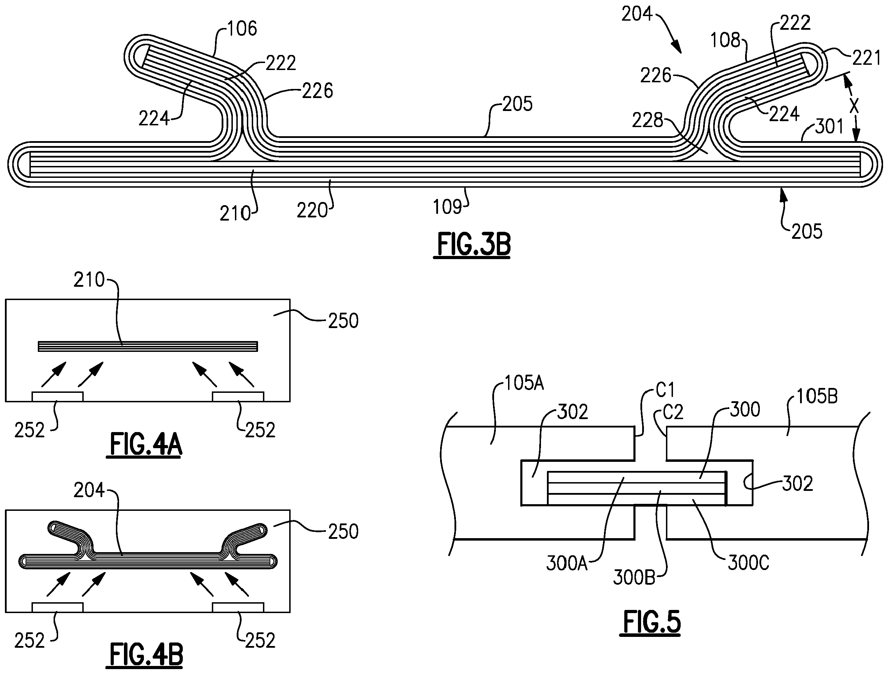

Figure 3B shows a cross-section of another embodiment of a BOAS 204. As shown, there are central reinforcement laminate 210 and outer overwrap plies 220. There are hook reinforcement plies 222 extending across the web 109 and into each of the hook areas. There are also inner front end aft plies 224 forming radially inner portions of the hooks 106 and 108.

Each of structures 150/152/154/210/220/224 and 224 are shown to include plural layers or laminates.

The use of several laminates in the web 109 provides benefits. However, it may be desirable to add additional material to make the laminates more stiff than their free woven fiber state. Thus, a process known as densification may be utilized to increase the density of the laminate material after assembly. If too many laminate are formed in the central web, the radially more central laminate may not be adequately densified.

Thus, as shown in Figure 4A the reinforcement plies in member 210 may be initially stiffened in a densification chamber 250 as a separate densification process. Injectors 252 are schematically shown which inject materials, such as a silicon carbide matrix material, into spaces between the fibers in the woven layers. This may be utilized in the Figure 4A step to provide 100% of the desired densification, or only some percentage. As an example, this initial step may be utilized to form between 10 and 90% of a desired densification.

In another method, the Figure 4A step could be eliminated, and the entire densification process occur in a single step.

One hundred percent densification may be defined as the layers being completely saturated with the matrix and about the fibers. One hundred percent densification may be defined as the theoretical upper limit of layers being completely saturated with the matrix and about the fibers, such that no additional material may be deposited. In practice, 100% densification may be difficult to achieve.

As shown in Figure 4B, the entire BOAS 204 is then formed with the additional layers, and having the overwrap plies 220 wrapping over the hook portions 222/224 and the reinforcement portion 210, and then additional densification occurs to all of these areas.

The same Figure 4A/4B process may be useful for the Figure 3A BOAS.

Returning to Figures 3A and 3B, spaces 158/156 and 228 between the laminates may be filled with loose fibers, no fibers, or other ceramic inserts, and in the densification process these will also be densified to harden.

In addition, it can be seen that the hooks 106 and 108 do not extend in a direction which is perpendicular to the vertical, or parallel to the axis A. Rather, the angle X is at some intermediate angle between 20 and 70 degrees relative to an upper surface 301 of the BOAS 104, 204, and radially inward of the hook.

The angle X can be taken as measured from an averaged position along the hook measured relative to an axis taken parallel to the rotational axis. That is, in practice the hook may not extend along any straight line. Outer surface 226 of hooks 106/108 are curved, not sharp cornered. This positioning facilitates the assembly of the BOAS, as will be explained below.

A method of forming a blade outer air seal could be said to include the steps of providing an inner reinforcement member formed of a plurality of layers fibrous woven structure. A Ceramic Matrix material is injected into the fibrous woven structure and about fibers within the fibrous woven structure. Outer overwrap layers are wrapped around the inner reinforcement member. A densification matrix about fibers is injected in the fibrous woven overwrap structure.

Figure 5 shows a featherseal 300 installed between two components of the engine 20. The featherseal may be installed between vanes, BOAS, or transition ducts, for example.

In one example, the featherseal 300 is installed between two BOAS seal segments 105A, 105B. Each of the BOAS seal segments 105 has first and second circumferential ends C1, C2. A circumferential end C1 of a seal segment 105A is arranged next to the second circumferential end C2 of an adjacent seal segment 105B. The featherseal 300 is arranged between two BOAS segments 105A, 105B in a slot 302 formed in the circumferential ends C1, C2 of the BOAS 104.

The featherseal 300 is formed from a CMC material. The CMC featherseal can withstand higher gaspath temperatures than comparable cobalt alloy featherseals. In this example, the featherseal 300 has several laminate layers 300A, 300B, 300C. Although three layers are shown, more or fewer layers may be used.

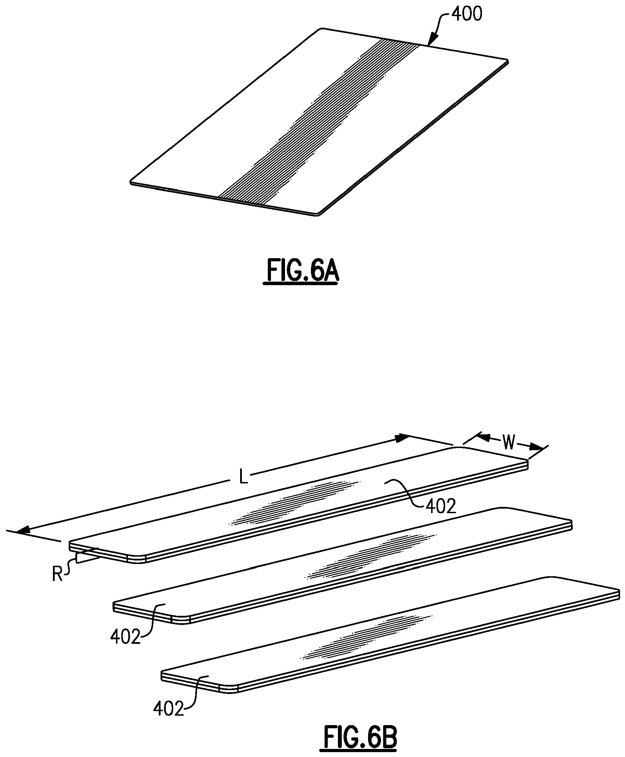

Figures 6A and 6B show an example method of forming a CMC featherseal. As shown in Figure 6A, the featherseal begins as a CMC sheet 400, before being manufactured to size. The featherseal may be densified as a continuous CMC sheet 400 before being machined to size, which may reduce cost. The densification of the featherseal may be performed the same way as for the BOAS 104, as described above. The CMC sheet 400 may be a fibrous woven structure that includes silicon carbide fibers, for example. The densification material may be a silicon carbide matrix.

After densification, the CMC sheet 400 is machined to size, as shown in Figure 6B. A single CMC sheet 400 may be used to form several featherseals 402. Once machined to size, the featherseal 402 is generally rectangular in shape with a width W and length L. When installed in a BOAS 104, for example, the length L extends along the axial direction and the width W extends in the circumferential direction. The featherseal 402 has a thickness R. In one example, the featherseal 402 has a uniform thickness.

The CMC featherseal 402 may be formed from multiple 2D plies of CMC sheet, or may be formed from a 3D weave. In some embodiments, the featherseal 402 may have a seal coating and/or environmental barrier coating (EBC) along all or a portion of the seal. For example, the featherseal 402 may have an EBC along the gaspath surface of the featherseal 402. The CMC featherseal 402 enables high temperature sealing capability for applications where transient gaspath ingestion may be observed.

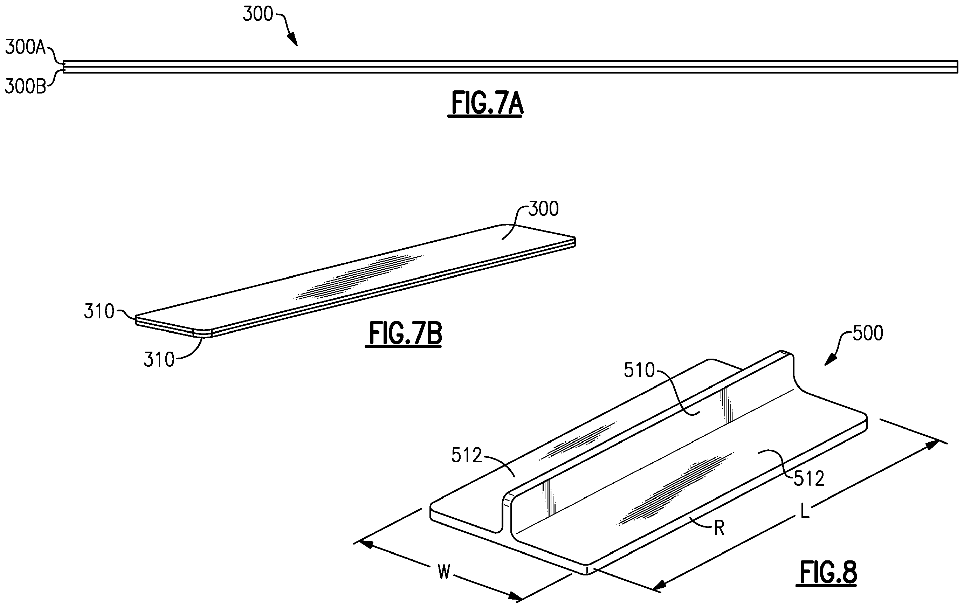

Figures 7A and 7B show the featherseal 300. As can be seen in Figure 7A, the featherseal 300 may be formed from a plurality of CMC laminate plies. In the illustrated example, the featherseal 300 has two plies 300A, 300B. As shown in Figure 7B, the featherseal 300 is generally rectangular and has rounded corners 310.

Figure 8 shows another embodiment of a featherseal 500. The featherseal 500 is generally rectangular in shape, having a width W and length L, and a thickness R. The featherseal 500 includes a rib 510 extending outward from the featherseal 500. In an embodiment, the rib 510 extends the entire length L of the featherseal. In other embodiments, the rib 510 may extend less than the entire length L of the featherseal. The rib 510 may be positioned at a midpoint along the width W. The rib 510 extends generally perpendicularly from the featherseal 500. The rib 510 generally bisects the featherseal 500 into two halves 512. The rib 510 may include a fillet where the rib 510 meets the halves 512. The rib 510 provides additional stiffness to the featherseal 500.

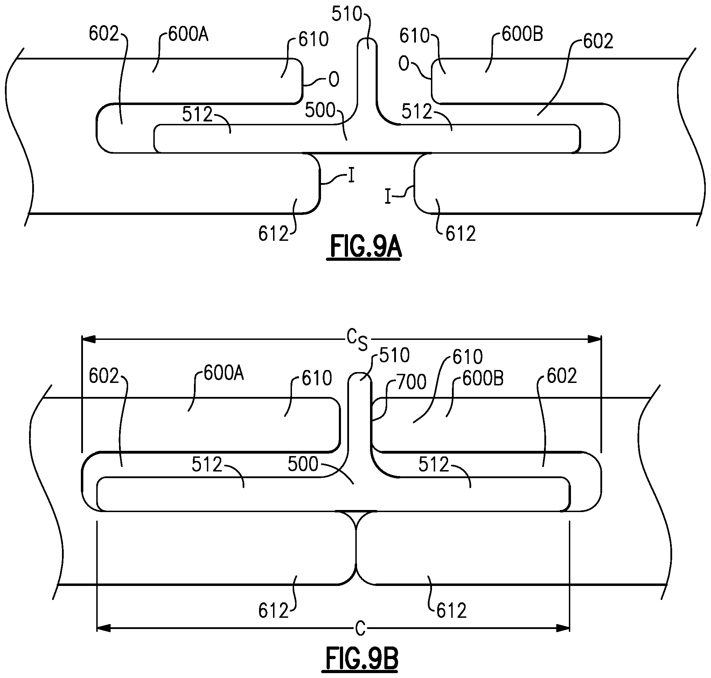

As shown in Figures 9A and 9B, the rib 510 locates the featherseal 500 between the engine components. Each of the components 600A, 600B has a slot 602 configured to receive the featherseal 500. The slot 602 is formed from a radially outer portion 610 and a radially inner portion 612. The radially outer portion 610 includes a surface O and the radially inner portion 612 includes a surface I. The surfaces O, I face in the circumferential direction, and are configured to engage surfaces O, I of an adjacent component. In some embodiments, the radially inner portion 612 extends further than the radially outer portion 610. Thus, when the components 602A, 602B are assembled adjacent one another, the radially inner portions 612 abut one another, while a gap is formed between the radially outer portions 610.

As shown in Figure 9B, the rib 510 of the featherseal 500 fits into the gap between the radially outer portions 610. The rib 510 may be in contact with a radially outer surface O of one of the radially outer portions 610 at contact point 700. This contact may reduce the risk of the featherseal edges riding into the corners of the slot 602, and thus reduce delamination risks of using a CMC featherseal. In an embodiment, the rib 510 extends radially outward of the components 600A, 600B.

In some examples, the slots 602 from two adjacent components 600A, 600B extend a slot distance C_{S} in the circumferential direction, and the featherseal 500 extends a distance C in the circumferential direction. As illustrated, the distance C is smaller than the slot distance C_{S}. This configuration may further reduce the risk of delamination.

Although an embodiment of this invention has been disclosed, a worker of ordinary skill in this art would recognize that certain modifications would come within the scope of this disclosure. For that reason, the following claims should be studied to determine the true scope and content of this disclosure.

## Claims

1. A turbine section (100) for a gas turbine engine (20), comprising:
a turbine blade (102) extending radially outwardly to a radially outer tip (103) and for rotation about an axis of rotation (A);
a blade outer air seal (104) having a plurality of segments (105) mounted in a support structure (110) and arranged circumferentially about the axis of rotation (A) and radially outward of the outer tip (103); and
a featherseal (300;500) arranged between each of the plurality of segments (105), wherein the featherseal (300;500) is formed from a ceramic matrix composite material.

2. The turbine section (100) of claim 1, wherein each of the plurality of segments (105) has a circumferentially extending slot (302;602) at each circumferential end, the circumferentially extending slot (302;602) forming a radially inner portion (612) and a radially outer portion (610).

3. The turbine section (100) of claim 2, wherein the featherseal (300;500) is arranged in the circumferentially extending slot (302;602).

4. The turbine section (100) of claim 2 or 3, wherein the featherseal (300;500) is in contact with the radially inner portion (612).

5. The turbine section (100) of any of claims 2 to 4, wherein the slots (302;602) of two adjacent segments (105) extend a slot distance (Cs) in the circumferential direction, and the featherseal (300;500) has a width (C) in a circumferential direction that is smaller than the slot distance (Cs).

6. The turbine section (100) of any of claims 2 to 5, wherein the radially inner portion (612) extends further in a or the circumferential direction than the radially outer portion (610), such that a gap is formed between the radially outer portions (610) of two adjacent segments (105) when the radially inner portions (612) contact each other.

7. The turbine section (100) of claim 6, wherein the featherseal (500) has an axially extending rib (510) arranged in the gap, optionally the rib (510) extends an entire axial length of the featherseal (500).

8. The turbine section (100) of claim 7, wherein the rib (510) is in contact with the radially outer portion (610).

9. The turbine section (100) of claim 7 or 8, wherein the rib (510) is centered on the featherseal (500) in a or the circumferential direction.

10. The turbine section (100) of any preceding claim, wherein the featherseal (300;500) is generally rectangular in shape, and/or the featherseal (300;500) has rounded corners (310).

11. The turbine section (100) of any preceding claim, wherein the featherseal (300;500) is formed from a continuous ceramic matrix composite sheet.

12. The turbine section (100) of any preceding claim, wherein the featherseal (300;500) has at least two plies (300A,300B,300C) of ceramic matrix composite material.

13. The turbine section (100) of any preceding claim, wherein the blade outer air seal (104) is:
a ceramic matrix composite material;
a monolithic ceramic material; or
a cobalt alloy.

14. A method of forming a featherseal (300;500), comprising the steps of:
providing a ceramic matrix composite sheet (400) formed from a plurality of layers of fibrous woven structure;
injecting a densification material into the ceramic matrix composite sheet (400); and
machining the ceramic matrix composite sheet (400) to a featherseal shape, optionally wherein the featherseal shape is a rectangular shape having rounded corners.

15. The method of claim 14, wherein the fibrous woven structure includes silicon carbide fibers and the densification material is a silicon carbide matrix.
